Europäisches Patentamt

European Patent Office

Office européen des brevets

(19)

(11) Veröffentlichungsnummer : **0 054 978**
**B1**

# EUROPÄISCHE PATENTSCHRIFT

(12)

(45) Veröffentlichungstag der Patentschrift :
24.04.85

(21) Anmeldenummer : 81110785.3

(22) Anmeldetag : 24.12.81

(51) Int. Cl.⁴ : **B 27 B** **5/20**, B 23 Q 11/00

(54) **Sägeeinrichtung.**

(30) Priorität : 24.12.80 AT 6318/80

(43) Veröffentlichungstag der Anmeldung : .
30.06.82 Patentblatt 82/26

(45) Bekanntmachung des Hinweises auf die Patenterteilung : 24.04.85 Patentblatt 85/17

(84) Benannte Vertragsstaaten :
**AT BE CH DE FR GB IT LI LU NL SE**

(56) Entgegenhaltungen :
CH-A-  277 404
CH-A-  300 371
CH-A-  409 356
DE-A- 1 528 003
DE-A- 1 628 878
DE-A- 2 903 574
DE-C-  807 641
GB-A- 1 161 584
US-A- 1 359 394
US-A- 1 584 086
US-A- 1 796 697
US-A- 1 825 104
US-A- 2 719 547
US-A- 2 786 500
US-A- 2 792 032
US-A- 2 945 516
US-A- 3 139 124

(73) Patentinhaber : **Janner, Ewald**
**Bildsteiner Strasse 65**
**A-6858 Schwarzach (AT)**

(72) Erfinder : **Janner, Ewald**
**Bildsteiner Strasse 65**
**A-6858 Schwarzach (AT)**

(74) Vertreter : **Rottmann, Maximilian R.**
**Hug Interlizenz AG Alte Zürcherstrasse 49**
**CH-8903 Birmensdorf/ZH (CH)**

## Beschreibung

Die vorliegende Erfindung bezieht sich auf eine Sägeeinrichtung mit mindestens einer Arbeitsauflage und einem Sägeaggregat, welches im Sinn einer Zustellbewegung in Höhenrichtung sowie im Sinn einer Vorschubbewegung wenigstens annähernd parallel bezüglich der Arbeitsauflage beweglich gelagert und mit einem Betätigungsglied für die Zustell- und Vorschubbewegung verbunden ist.

Eine Sägeeinrichtung mit in Höhen- bzw. Zustellrichtung sowie in Horizontal- bzw. Vorschubrichtung beweglichem, also gegebenenfalls auch einstellbaren Sägeaggregat ist bekannt aus der DE-PS 960 382. Diese umfasst eine Entlastungsvorrichtung in Form einer Zugfeder, die an einem Flaschenzug angreift und über diesen die Gewichtskraft des höhenbeweglichen Sägeaggregates teilweise ausgleicht. Die wirksame Entlastungs- oder Hubkraft ist entsprechend der Federkennlinie — im Falle der bekannten Zugfederanordnung im wesentlichen eine lineare Kennlinie — abhängig von der Hubstellung des Sägeaggregates und damit veränderlich. Demgemäss ist auch die Differenz zwischen Gewichtskraft und Entlastungskraft in den verschiedenen Hubstellungen unterschiedlich, was die Bedienung der Einrichtung erschwert und beispielsweise einen im wesentlichen vollständigen Gewichtsausgleich unmöglich macht. Diese Gegebenheiten können mit den bekannten Mitteln grundsätzlich nicht überwunden, sondern nur durch eine entsprechend weiche Federkennlinie gemildert werden, was aber den Nachteil einer grossen Federlänge und damit eines erhöhten Platzbedarfes bzw. Bauaufwandes mit sich bringt.

Aus der CH-PS 300 371 ist eine Sägeeinrichtung mit einem doppelten, d. h. zwei geläufig rotierende Sägeblätter umfassenden Sägeaggregat bekannt. Dieses ist auf einer auf einem hin- und herbewegbaren Laufwagen gelagerten Wippe angeordnet, wobei eine Bewegung im Sinn einer Zustellung in Höhenrichtung durch Betätigung der Wippe und eine Bewegung im Sinne eines Vorschubs durch Betätigung des Laufwagens gegeben ist. Für die Verschiebung des Laufwagens ist ein Betätigungselement vorgesehen, währenddem die Betätigung in Zustellrichtung, d. h. das Umsteuern der Wippe mehr oder weniger selbsttätig erfolgt und im voraus, vor dem eigentlichen Sägevorgang, vorgewählt werden muss. Eine Hubentlastung ist dabei nicht vorgesehen.

Eine Aufgabe der vorliegenden Erfindung ist die Schaffung einer Sägeeinrichtung der eingangs erwähnten Art mit einem im Sinne einer Hub- bzw. Zustellbewegung sowie einer Horizontal- bzw. Vorschubbewegung gelagertem Sägeaggregat, wobei beide Bewegungen in Aufeinanderfolge mittels ein und desselben Betätigungsgliedes, insbesondere eines Handbetätigungsgliedes, durchführbar sein sollen, ohne dass für die beiden Bewegungsabschnitte des Sägeaggregates unterschiedliche und in besondere Richtungen zu lenkende Betätigungsbewegungen erforderlich wären. Die Lösung dieser Erfindungsaufgabe kennzeichnet sich durch die Merkmale des Patentanspruches 1.

Bei einer bevorzugten Ausführungsform der Erfindung ist vorgesehen, dass die das Sägeaggregat in der Ausgangs-Anschlagstellung der Vorschubbewegung haltende Kraftwirkung der Rückhaltevorrichtung grösser als die für die Hubbewegung erforderliche, in Richtung der Vorschubbewegung wirkende Kraftkomponente am Betätigungsglied bemessen ist. Somit ist sichergestellt, dass sich das Sägeaggregat, bei Inbetriebnahme des Betätigungsglied, zunächst in Zustellrichtung bewegt, bis es seine Arbeitshöhe erreicht hat, bevor der eigentliche Schnitt in Vorschubrichtung beginnt. Diese Anordnung kann dadurch unterstützt werden, indem das Sägeaggregat in der Ausgangs-Anschlagstellung seiner Vorschubbewegung höhenbeweglich gelagert ist.

Im Interesse einer schon eingangs angesprochenen Bedienungserleichterung kann das Hubgetriebe als Entlastungsvorrichtung für das Sägeaggregat in Richtung der Zustellbewegung zur zumindest teilweisen Kompensation des Gewichtes des Sägeaggregates ausgebildet ist.

Für die Ausbildung des Hubgetriebes im Rahmen der erfindungsgemässen Anordnung bestehen verschiedene Möglichkeiten : Das Hubgetriebe kann in der Art eines Flaschenzugs als mit dem Betätigungsglied verbundene, eine Mehrzahl von Umlenkrollen aufweisende Seilzuganordnung ausgebildet oder aber durch eine schwenkbar am Traggestell des Sägeaggregates gelagerte, mit dem Betätigungsglied gekoppelte Doppelhebelanordnung gebildet sein.

Die kombinierte Hub- und Vorschubbewegung des Sägeaggregates erlaubt in besonders vorteilhafter Weise die an sich bekannte, um eine Vertikalachse schwenkbare Anordnung des Sägeaggregates bzw. eines entsprechenden Maschinengestells innerhalb eines Grundgestells, wobei letzteres zusätzliche Arbeitsauflagen oder Anschlagelemente tragen kann.

Weitere Vorteile der Erfindung werden anhand der in den Zeichnungen schematisch dargestellten Ausführungsbeispiele erläutert. In den Zeichnungen zeigen :

Figur 1 eine schematische Seitenansicht eines ersten Ausführungsbeispiels der Sägeeinrichtung,

Figuren 2 und 3 schematische Seitenansichten einer weiteren Sägeeinrichtung mit Seilzug-Hubgetriebe in angehobener Arbeitsstellung, bzw. in abgesenkter Ruhestellung ; und

Figuren 4-9 schematische Seitenansichten verschiedener Ausführungen von Sägeaggregat-Hubbewegungslagerungen mit Entlastungsvorrichtung bzw. Hubgetriebe, und zwar jeweils in abgesenkter Ruhestellung sowie in angehobener Arbeitsstellung.

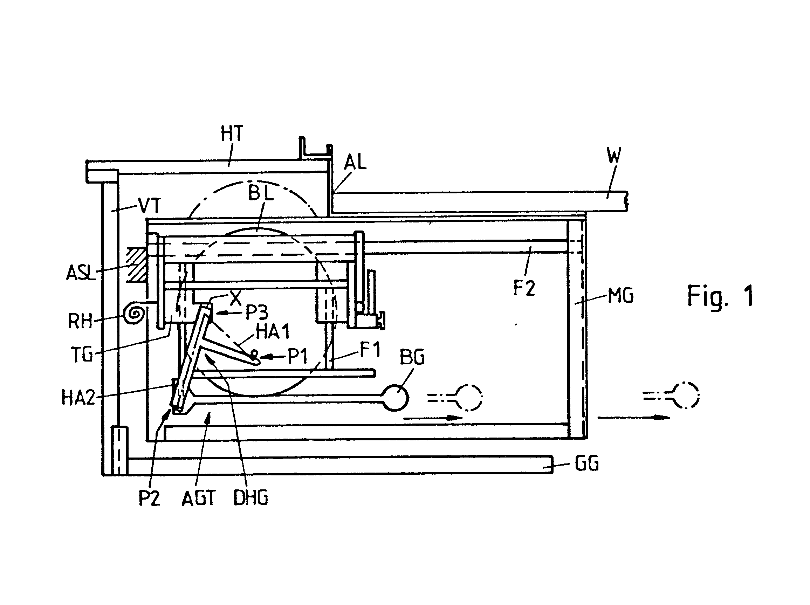

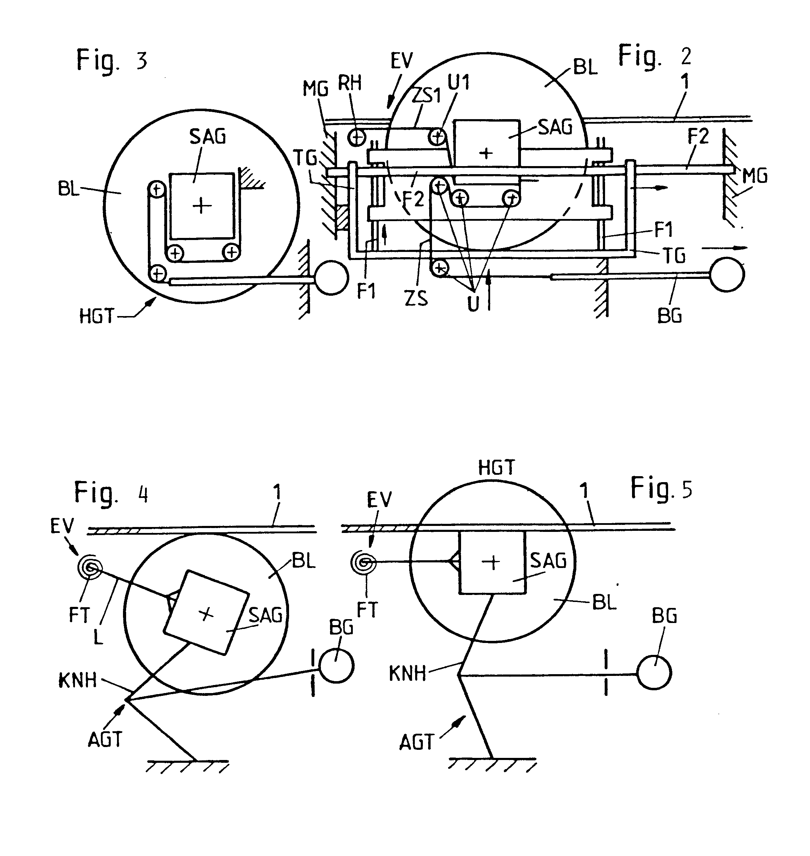

Die wesentlichen Teile der Sägeeinrichtung nach Fig. 1 und 2 werden gebildet von einem Arbeitstisch 1, dem Sägeaggregat SAG mit dem Sägeblatt BL, dem den Arbeitstisch 1 tragenden Maschinengestell MG, einem feststehenden Grundgestell GG sowie einer Anschlagleiste AL. Der Arbeitstisch 1 bzw. das den Arbeitstisch tragende Maschinengestell MG ist zusammen mit dem Sägeaggregat SAG um eine vertikale Achse gegenüber dem feststehenden Grundgestell GG verdrehbar und in den gewünschten Stellungen gegenüber dem Grundgestell feststellbar. Das Sägeaggregat SAG bzw. das Sägeblatt BL desselben ist gegenüber dem Arbeitstisch 1 höhenverstellbar und in horizontaler Richtung verschiebbar im Maschinengestell MG gehalten. Die Anschlagleiste AL ist direkt über entsprechende Tragschienen mit dem Grundgestell GG verbunden.

Bei der Ausführung nach Fig. 2 und 3 ist das Sägeaggregat SAG an Führungen F1 innerhalb eines Traggestelles TG im Sinne der Zustellbewegung höhenbeweglich gelagert. Das Traggestell TG ist seinerseits am Maschinengestell MG mittels Führungen F2 im Sinne einer Vorschubbewegung in Bezug auf den Arbeitstisch 1 horizontal zwischen der in Fig. 2 angedeuteten, angehobenen Ausgangs-Arbeitsstellung und einer nicht näher dargestellten, nach rechts verschobenen Endarbeitsstellung verschiebbar gelagert. Ein flaschenzugartig ausgebildetes Huggetriebe HGT mit Zugseil ZS und mehreren Umlenkrollen U, die am Traggestell TG gelagert sind, bewirkt bei einer Bewegung des Betätigungsgliedes BG in Pfeilrichtung von links nach rechts zunächst das Anheben des Sägeaggregates aus der unteren Ruhestellung gemäss Fig. 3 in die angehobene Ausgangs-Arbeitsstellung gemäss Fig. 2., Dabei wird auf das Traggestell eine Horizontalkraft ausgeübt, der jedoch durch eine Rückhaltevorrichtung in Form einer Wickel-Zugfeder das Gleichgewicht gehalten wird, wobei das Traggestell TG an einem mit dem Maschinengestell MG verbundenen Anschlag ASL liegt. Das Sägeaggregat führt somit eine genau vertikale Zustellbewegung bis zum vorgesehenen Ueberstand des Sägeblattes BL über dem Arbeitstisch 1 aus. Diese Hubstellung kann in nicht näher dargestellter Weise mittels eines verstellbaren Anschlages bestimmt werden. Die Rückhaltevorrichtung RH mit ihrer Zugfeder wirkt über ein weiteres Zugseil ZS1 mit einer eigenen Umlenkrolle U1 nicht nur in horizontaler Rückhalterichtung auf das Traggestell TG ein, sondern infolge der Umlenkung auch in Vertikalrichtung nach oben auf das Sägeaggregat SAG. Demzufolge bildet der Feder-Hubenergiespeicher der Rückhaltevorrichtung gleichzeitig eine Entlastungsvorrichtung, welche das Gewicht des Sägeaggregates in vorgesehenem Masse ausgleicht, allerdings nicht mit hubunabhängigem Differenzbetrag, weil die Rückhaltefeder eine hubabhängige Stützkraft liefert.

Bei der Ausführung nach Fig. 4 und 5 tritt an die Stelle eines Hubgetriebes mit zur Betätigungskraft proportionaler, also bei konstanter Betätigungskraft ebenfalls konstanter Hubkraft ein Ausgleichsgetriebe AGT in Form eines Doppellenker-Kniehebelgetriebes KNH, mit dem das Betätigungsglied gekoppelt ist. Das Sägeaggregat SAG ist mittels eines Lenkers L um eine Horizontalachse X schwenkbar gelagert und mit einer eigenen Entlastungsvorrichtung EV verbunden, welch letztere als Hubenergiespeicher eine Torsions- oder Wickelfeder FT aufweist. Das wirksame Uebersetzungsverhältnis des Ausgleichsgetriebes stellt sich in der aus Fig. 4 und 5 ohne weiteres ersichtlichen Weise als Produkt der bekannten Kraftübertragungsfunktion eines Kniehebelgetriebes mit dem Kosinus des gegen die Horizontale gemessenen Hubstellungswinkels a des Lenkers L dar. Dieses Gesamtübersetzungsverhältnis kann durch geeignete Bemessung und Wahl der Bewegungs-Winkelbereiche der verschiedenen Lenker leicht so bemessen werden, dass ein annähernd konstanter Teilausgleich der winkelproportionalen Aenderung der Stützkraft der Entlastungsvorrichtung EV erreicht wird. Mit dem Betätigungsglied ist dann eine im wesentlichen konstante Differenzkraft während des Hubvorganges zu überwinden, was die Bedienung wesentlich erleichtert, insbesondere im Falle der Handbedienung. Eine willkommene Vereinfachung dieser Ausführung ist auch die Vertikalführung des Sägeaggregates mit Hilfe einer einfachen Schwenklagerung in der Achse X. Die Anordnung gemäss Fig. 4 und 5 kann ohne weiteres in eine Gesamtanordnung gemäss Fig. 2 anstelle der dortigen Vertikalführung und des Hubgetriebes eingesetzt werden, wobei jedoch eine besondere Rückhaltung mit Hilfe einer einfachen Zugfeder vorzusehen ist.

Im übrigen versteht es sich, dass im Rahmen der Erfindungsgedanken die Hebel-Hubbewegungsführung des Sägeaggregates durch Anordnung weiterer Lenkerpaare im Sinne einer Parallelogrammführung ausgestaltet werden kann, wobei eine etwa störende Kippbewegung des Sägeaggregates während des Anhebens entfällt. Im übrigen kann das Sägeaggregat auch hier eine genaue Vertikalbewegung ausführen, wenn der Anschlag (siehe ASL in Fig. 2) als einseitig wirkende Vertikalführung ausgebildet wird, mit der das Sägeaggregat während seiner Vertikal- und etwaigen Schwenkbewegung in Anlage steht.

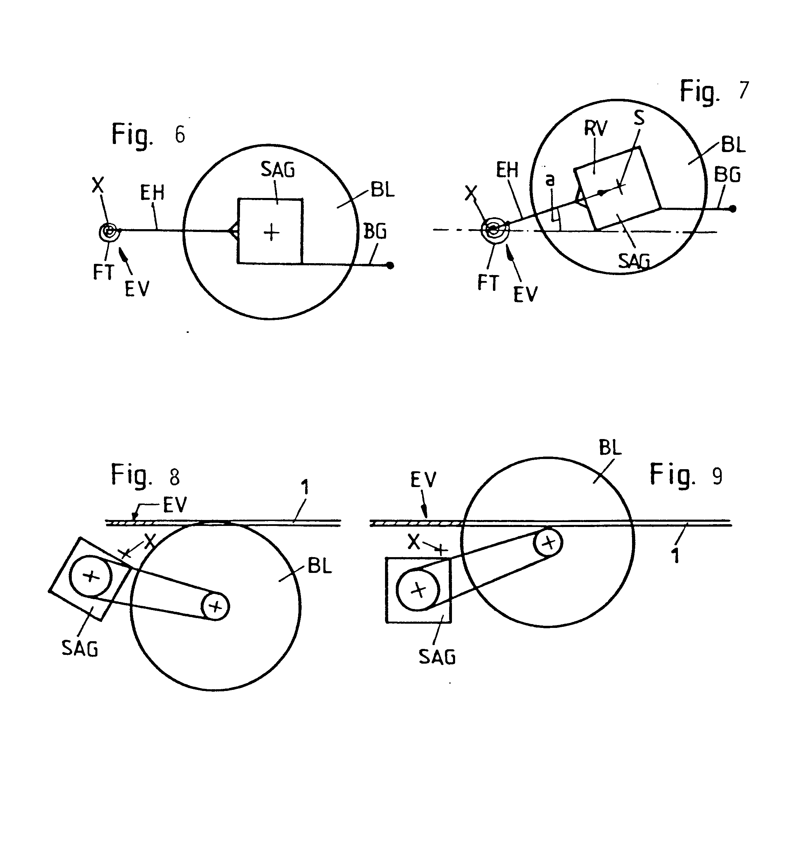

Entsprechendes gilt für die Hubbewegungsführung mit Einfach-Hebelglied EH als Ausgleichsgetriebe nach Fig. 6 und 7. Der Kräfteausgleich unter Berücksichtigung der veränderlichen Stützkraft der Entlastungsvorrichtung EV wird durch den Kosinusfaktor gemäss Winkel a in einem entsprechend passend gewählten Winkelbereich verwirklicht, weil der wirksame Gewichts-Hebelarm des Sägeaggregates durch die Vertikalprojektion des Radiusvektors RV zwischen der Achse X und dem Schwerpunkt S des Sägeaggregates bestimmt ist. Bei absinkendem Sägeaggregat nimmt dieser wirksame Hebelarm zu, ebenso wie die Stützkraft der hierbei zunehmend verformten Feder der Entlastungsvorrichtung. Eine weitere einfache Entlastungsmöglichkeit ist in den Fig. 8 und 9 angedeutet, indem das Sägeaggregat bzw. die entsprechende Antriebseinheit einerseits und das Sägeblatt andererseits um eine Horizontalachse X schwenkbar gelagert ist, welch letztere im gesamten Schwenkbereich annähernd über dem gemeinsamen Schwerpunkt der aus Sägeaggregat und Sägeblatt bestehenden Anordnung liegt.

Bei der Ausführung nach Fig. 1 entspricht die Lagerung des Sägeaggregats SAG mit seinem Traggestell TG an Vertikal- und Horizontalführungen F1 bzw. F2 im wensentlichen der Anordnung nach Fig. 6. Die Bezugszeichen hierfür und für übrige übereinstimmende Teile entsprechen daher der vorgenannten Darstellung. Abweichend ist jedoch ein Ausgleichsgetriebe AGT mit einem Doppelhebelglied DHG vorgesehen, dessen Hebelarme HA1 und HA2 unter einem passend gewählten Winkel zueinander angeordnet sind. Der Hebelarm HA1 greift beispielsweise über ein Rollenförmiges Uebertragungsglied am Punkt P1 des Sägeaggregats an, während der Hebelarm HA2 bei P2 mit dem horizontal beweglichen Betätigungsglied BG gekuppelt ist. Das Doppelglied selbst ist bei P3 mit einer Horizontalachse am Traggestell TG schwenkbar gelagert. Durch passende Wahl der Hebelarmlängen und der Winkelbereiche lässt sich auch hier ein Gesamtübersetzungsverhältnis des Ausgleichsgetriebes erreichen, welches annähernd linear bezüglich der Bewegung bzw. der Horizontalbewegung des Betätigungsgliedes BG während der Hubbewegung entspricht. Dieses Gesamtübersetzungsverhältnis ist ersichtlich durch das Produkt der Vertikalprojektion des Hebelarmes HA2 bzw. der Vertikalprojektion des Hebelarmes HA1, d. h. durch das Produkt der entsprechenden Winkelfunktionen und Hebelarmlängen, bestimmt. Eine nicht dargestellte Entlastungsvorrichtung kann in einfacher Weise beispielsweise als in der Achse X wirkende Torsionsfeder ausgebildet werden. Für die Einhaltung der Ausgangs-Anschlagstellung des Sägeaggregats gemäss Figur 14 während der Hubbewegung sorgt eine Rückhaltevorrichtung RH mit einer Wickel-Zugfeder, welche das Traggestell TG am Anschlag ASL hält.

## Patentansprüche

1. Sägeeinrichtung mit mindestens einer Arbeitsauflage und einem Sägeaggregat, welches im Sinne einer Zustellbewegung in Höhenrichtung sowie im Sinne einer Vorschubbewegung wenigstens annähernd parallel bezüglich der Arbeitsauflage beweglich gelagert und mit einem Betätigungsglied für die Zustell- und Vorschubbewegung verbunden ist, dadurch gekennzeichnet, dass das zwischen einer unteren und einer oberen Anschlagstellung beweglich gelagerte Sägeaggregat mit einer nachgiebig entgegen der Vorschubbewegung wirkenden und das Sägeaggregat im Ruhezustand in einer Anschlagstellung haltenden Rückhaltevorrichtung (RH) sowie mit einem Hubgetriebe (HGT) gekoppelt ist, an dem das wenigstens teilweise parallel zur Vorschubbewegung bewegliche Betätigungsglied (BG) für die Zustell- und Vorschubbewegung angreift.

2. Sägeeinrichtung nach Anspruch 1, dadurch gekennzeichnet, dass die das Sägeaggregat in der Ausgangs-Anschlagstellung der Vorschubbewegung haltende Kraftwirkung der Rückhaltevorrichtung (RH) grösser als die für die Hubbewegung erforderliche, in Richtung der Vorschubbewegung wirkende Kraftkomponente am Betätigungsglied (BG) bemessen ist.

3. Sägeeinrichtung nach Anspruch 1 oder 2, dadurch gekennzeichnet, dass das Sägeaggregat in der Ausgangs-Anschlagstellung seiner Vorschubbewegung höhenbeweglich gelagert ist.

4. Sägeeinrichtung nach einem der Ansprüche 1-3, dadurch gekennzeichnet, dass das Hubgetriebe (HGT) als Entlastungsvorrichtung für das Sägeaggregat in Richtung der Zustellbewegung zur zumindest teilweisen Kompensation des Gewichtes des Sägeaggregates ausgebildet ist.

5. Sägeeinrichtung nach einem der vorangehenden Ansprüche, dadurch gekennzeichnet, dass das Hubgetriebe in der Art eines Flaschenzugs als mit dem Betätigungsglied (BG) verbundene, eine Mehrzahl von Umlenkrollen (U) aufweisende Seilzuganordnung (ZS) ausgebildet ist.

6. Sägeeinrichtung nach einem der Ansprüche 1-4, dadurch gekennzeichnet, dass das Hubgetriebe durch eine schwenkbar am Traggestell (TG) des Sägeaggregates gelagerte, mit dem Betätigungsglied (BG) gekoppelte Doppelhebelanordnung (HA1, HA2) gebildet ist.

## Claims

1. Saw apparatus having at least one work surface and a saw unit which is supported for movement as to height in the sense of an approximating movement as well as in the sense of an advancing movement at least approximately parallel to the work surface which is connected to an actuating member for the approximating and advancing movements, characterised in that the saw unit supported for movement between a lower and an upper position is connected to a biasing arrangement (RH) resiliently acting in a direction opposite to the advancing movement and holding the saw unit to rest at an endposition and also to a lifting gear (HGT), to which the actuating member (BG) for the approximating and advancing movement, which is movable at least partially parallel to the advancing movement, is coupled.

2. Saw apparatus according to claim 1, characterised in that the force of the biasing arrangement (RH) holding the saw unit in the starting end-position is greater than the component of force on the actuating member (BG) in the direction of the advancing movement which is necessary for the lifting movement.

3. Saw apparatus according to claim 1 or claim 2, characterised in that the saw unit is vertically movable in the starting end-position of its advancing movement.

4. Saw apparatus according to any of claims 1 to 3, characterised in the lifting gear (HGT) is formed as a counterbalance device for the saw unit in the direction of the approximating movement for at least partial compensation of the weight of the saw unit.

5. Saw apparatus according to any of the preceding claims, characterised in that the lifting gear is formed in the manner of a block and tackle, as a tension rope arrangement (ZS) connected with the actuating member (BG) and having a plurality of pulleys (U).

6. Saw apparatus according to any of claims 1 to 4, characterised in that the lifting gear is formed by a double lever arrangement (HA1, HA2) connected to the actuating member (BG), supported pivotally on a supporting frame (TG) of the saw unit.

**Revendications**

1. Installation de sciage comprenant au moins une table de travail et un corps de scie qui est monté mobile pour un mouvement d'approche en sens vertical ainsi que pour un mouvement d'avance au moins sensiblement parallèlement à la table de travail et est relié avec un organe d'actionnement pour les mouvements d'approche et d'avance, caractérisée par le fait que le corps de scie monté mobile entre une position de butée inférieure et une position de butée supérieure est accouplé à un dispositif de retenue (PH) déformable à l'opposé du mouvement d'avance et maintenant le corps de scie à l'état de repos dans une position de butée ainsi qu'à un mécanisme de levage (HGT) avec lequel est en prise l'organe d'actionnement (BG) pour les mouvements d'approche et d'avance, mobile au moins partiellement parallèlement au mouvement d'avance.

2. Installation de sciage selon la revendication 1, caractérisée par le fait que la force du dispositif de retenue (RH) maintenant le corps de scie dans la position de butée de départ du mouvement d'avance est plus grande que les composantes de force sur l'organe d'actionnement (BG) agissant dans le sens du mouvement d'avance et nécessaires pour le mouvement de levage.

3. Installation de sciage selon la revendication 1 ou 2, caractérisée par le fait que le corps de scie est monté mobile en hauteur dans la position de butée de départ de son mouvement d'avance.

4. Installation de sciage selon l'une des revendications 1 à 3, caractérisée par le fait que le mécanisme de levage (HGT) est réalisé sous la forme d'un dispositif d'équilibrage pour le corps de scie dans le sens du mouvement d'approche pour compenser au moins partiellement le poids du corps de scie.

5. Installation de sciage selon l'une des revendications précédentes, caractérisée par le fait que le mécanisme de levage est du type palan et présente un agencement de tirants à câble (ZS) relié à l'organe d'actionnement (BG) et présentant une pluralité de poulies de renvoi (U).

6. Installation de sciage selon l'une des revendications 1 à 4, caractérisée par le fait que le mécanisme de levage est formé par un agencement à double levier (HA1, HA2) monté pivotant sur le bâti (TG) du corps de scie et accouplé à l'organe d'actionnement (BG).

Fig. 1

0 054 978

Fig. 3

Fig. 2

Fig. 4

Fig. 5

2

Fig. 6

Fig. 7

Fig. 8

Fig. 9